# FASCICULE DE BREVET EUROPEEN

(11) **EP 2 249 185 B1**
(45) Date de publication et mention de la délivrance du brevet: **17.03.2021**
(21) Numéro de dépôt: 09006180.5
(22) Date de dépôt: 06.05.2009
(51) Int. Cl.: G01V 3/08, B07C 5/344

(54) **DISPOSITIF DE DÉTECTION DE MÉTAUX DANS DES MATÉRIAUX LE TRAVERSANT**
VORRICHTUNG ZUR DETEKTION VON METALLEN IN MATERIALIEN, DIE SIE DURCHLAUFEN
DEVICE FOR DETECTING METALS IN MATERIALS PASSING THROUGH IT

(43) Date de publication de la demande: 10.11.2010
(73) Titulaire: Pharma Technology S.A., 1402 Nivelles (BE)
(72) Inventeur: DOLLINGER, Martial, 1420 Braine l`Alleud (BE)
(74) Mandataire: Gevers Patents

(56) Documents cités:
- EP-A- 1 985 557
- DE-A1- 3 411 860
- GB-A- 1 255 338

## Description

La présente invention se rapporte à un dispositif de détection de métaux dans des matériaux convoyés au travers du dispositif, ces matériaux se présentant par exemple sous forme de comprimés, de granules, de gélules ou de sous toute autre forme solide. Un tel dispositif comprend une unité de détection ayant un orifice d'entrée et un orifice de sortie entre lesquels est ménagé un espace de passage desdits matériaux, une conduite de convoyage desdits matériaux au travers de ladite unité, disposée dans ledit espace de passage, une première extrémité de la conduite émergeant de ladite unité par son orifice d'entrée et une seconde extrémité émergeant de l'unité par son orifice de sortie.

De tels détecteurs sont utilisés notamment dans l'industrie agroalimentaire pour permettre de détecter dans des produits alimentaires des particules métalliques les rendant impropres à la consommation. Ils sont également utilisés dans l'industrie pharmaceutique pour détecter la présence de particules métalliques indésirables, notamment dans des comprimés ou des gélules, avant que ces derniers soient conditionnés en vue de leur commercialisation. Généralement, un tel détecteur est disposé dans la chaine de fabrication de ces comprimés ou gélules, entre une unité de dépoussiérage de ces derniers elle-même disposée après une unité de façonnage de comprimés ou de gélules à partir de poudre de médicament et une unité de tri des comprimés ou gélules pollués par des particules métalliques de ceux qui peuvent ensuite être conditionnés pour être commercialisés.

Dans les dispositifs de détection de métaux selon l'état de la technique, la conduite de convoyage est réalisée dans un matériau rigide, généralement une matière plastique. Dès lors où l'unité d'alimentation en matériaux du dispositif est animée de vibrations, comme c'est le cas notamment d'une unité de dépoussiérage de comprimés ou gélules pharmaceutiques, dans laquelle ces comprimés ou gélules sont acheminés de bas en haut dans l'unité le long d'une rampe généralement en spirale, au moyen de vibrations émises par un moteur oscillant disposé à la base de cette unité, il est nécessaire d'interposer entre la conduite de convoyage et ladite unité d'alimentation un élément d'amortissement de ces vibrations, de sorte qu'elles soient le moins possible transmises au dispositif de détection de métaux et à l'unité de tri qui le suit. De tels vibrations pourraient en effet peu à peu détériorer le fonctionnement de ce dispositif et de cette unité. Généralement, cet élément d'amortissement est constitué d'un manchon souple agencé pour être parcouru par les matériaux sortant de l'unité d'alimentation, l'une des extrémités de ce manchon étant agencée pour être connectée de manière amovible et étanche à l'unité d'alimentation et l'autre extrémité étant agencée pour être connectée de la même manière à la première extrémité de la conduite de convoyage. Quant à la seconde extrémité de la conduite de convoyage, elle est généralement agencée pour être connectée à l'unité de tri par forçage étanche et amovible dans un orifice d'une membrane élastique agencée à l'entrée de cette unité, le périmètre de cet orifice étant inférieur à celui de la deuxième extrémité de la conduite de convoyage et en en épousant le profil général.

Même dans des situations où l'unité d'alimentation en matériaux n'est pas animée de vibrations, il est généralement nécessaire de prévoir l'élément d'amortissement susmentionné, dans la mesure où sa souplesse permet de compenser un éventuel défaut d'alignement de la première extrémité de la conduite de convoyage et de ladite unité d'alimentation, défaut qui en l'absence de l'élément d'amortissement pourrait nuire à l'étanchéité de la connexion de ladite extrémité à ladite unité Le document DE 34 11 860 divulgue un dispositif de détection de métaux dans des matériaux. Le document EP 1 985 557 divulgue un dispositif de transport et de dépoussiérage de comprimés ou de pièces pressées analogues provenant d'une presse à comprimés. Le document GB 1 255 338 divulgue un dispositif de détection de métaux dans des matériaux.

Un tel dispositif de détection de métaux selon l'état de la technique présente certains inconvénients problématiques.

Tout d"abord, comme il vient d'être indiqué, il nécessite l'interposition d'un élément d'amortissement entre ce dispositif et une unité d'alimentation en matériaux, spécialement lorsque celle-ci est animée de vibrations, ce qui complique l'assemblage du dispositif et de l'unité en question et en augmente le coût de fabrication ainsi que de main d'oeuvre pour réaliser cet assemblage et le défaire lorsque le dispositif et l'unité d'alimentation doivent être séparés en vue de leur entretien ou de leur nettoyage. Or un tel nettoyage est fréquemment nécessaire, à tout le moins à chaque fois que le type de matériaux alimentant le dispositif est modifié, pour éviter toute pollution des matériaux du nouveau type par des résidus éventuels de ceux du type précédent, pollution particulièrement critique dans l'industrie agroalimentaire et pharmaceutique.

Ensuite, la présence d'un élément d'amortissement rend nécessaire de prévoir un moyen de connexion étanche et amovible de celui-ci à la première extrémité de la conduite de convoyage du dispositif, moyen de connexion qui peut présenter des problèmes d'étanchéité en cas de positionnement défectueux par un opérateur

La présente invention résout les problèmes susmentionnés en offrant un dispositif de détection de métaux dans des matériaux traversant le dispositif selon la revendication 1. De plus, la présente invention propose l'utilisation d'un conduit de convoyage selon la revendication 7.

La présente invention résout les problèmes susmentionnés en offrant un dispositif de détection de métaux dans des matériaux traversant le dispositif comprenant une unité de détection ayant un orifice d'entrée et un orifice de sortie entre lesquels est ménagé un espace de passage desdits matériaux, une conduite de convoyage desdits matériaux au travers de ladite unité, disposée dans ledit espace de passage, une première extrémité de la conduite émergeant de ladite unité par son orifice d'entrée et une seconde extrémité émergeant de l'unité par son orifice de sortie, ladite conduite étant constituée d'un matériau souple.

Grâce au fait que la conduite de convoyage du dispositif selon l'invention est constituée d'un matériau souple, il n'est pas nécessaire d'interposer un élément d'amortissement entre la première extrémité de cette dernière et une unité d'alimentation en matériaux dudit dispositif. En effet, une conduite constituée d'un matériau souple offre l'avantage à la fois de ne pas transmettre à l'unité de détection les vibrations le cas échéant engendrées par l'unité d'alimentation et d'éliminer grâce à sa souplesse toute difficulté d'alignement entre la conduite de convoyage et ladite unité d'alimentation.

L'invention va à présent être décrite plus en détails au moyen d'un exemple de mode de réalisation non limitatif de la portée des revendications et en référence aux figures jointes, dans lesquelles:
La figure 1 est une vue de profil en perspective d'un dispositif de détection de métaux selon l'état de la technique, connecté à une unité d'alimentation en matériaux et à une unité de tri de ces matériaux.
La figure 2 est une vue en perspective d'un dispositif de détection de métaux selon l'invention, connecté aux mêmes unités.
La figure 3 est une vue en perspective du dispositif selon la figure 2, dans lequel la conduite de convoyage est entourée d'une manchette souple.
La figure 4 est une vue partielle de profil de la conduite de convoyage et de la manchette du dispositif selon la figure 3.
La figure 5 est une vue de profil de la conduite de convoyage et de la manchette du dispositif selon la figure 3, dans laquelle ladite conduite est déconnectée de l'unité d'alimentation et de l'unité de tri.

Dans les figures, des mêmes numéros de références désignent des éléments identiques représentés par lesdites figures.

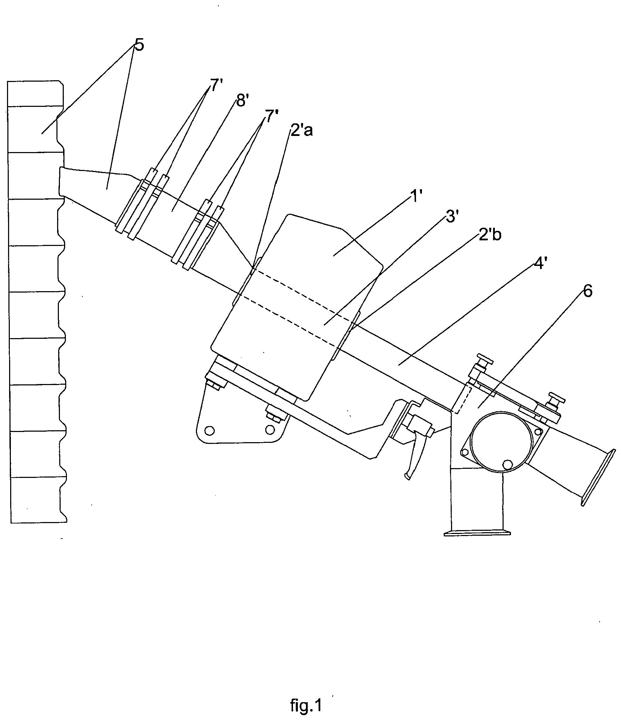

La figure 1 illustre un dispositif de détection de métaux selon l'état de la technique, comprenant une unité de détection 1' ayant un orifice d'entrée 2'a et un orifice de sortie 2'b entre lesquels est ménagé un espace 3' de passage desdits matériaux au travers de l'unité de détection, une conduite de convoyage rigide 4' desdits matériaux au travers de ladite unité, disposée dans ledit espace de passage, une première extrémité de la conduite émergeant de cette unité par son orifice d'entrée et étant connectée à une unité d'alimentation en matériaux 5, en l'occurrence une colonne de dépoussiérage de comprimés ou gélules pharmaceutiques, par l'intermédiaire d'un élément d'amortissement 8' constitué d'un manchon souple dont une extrémité est enfilée de manière étanche et amovible sur la première extrémité de la conduite de convoyage et maintenue en place au moyen de colliers autoserrants 7' et l'autre extrémité du manchon souple est également enfilée de manière étanche et amovible sur un élément de sortie de l'unité d'alimentation maintenue en place au moyen de mêmes colliers 7'. La seconde extrémité de la conduite de convoyage émergeant de l'unité de détection par son orifice de sortie est connectée de manière étanche et amovible à une unité de tri 6 dans les comprimés ou gélules sortant du dispositif de ceux contenant des particules de métal et de ceux n'en contenant pas. Cette connexion est réalisée par forçage étanche et amovible de ladite seconde extrémité de la conduite de convoyage dans un orifice d'une membrane souple élastique agencée à l'entrée de l'unité de tri.

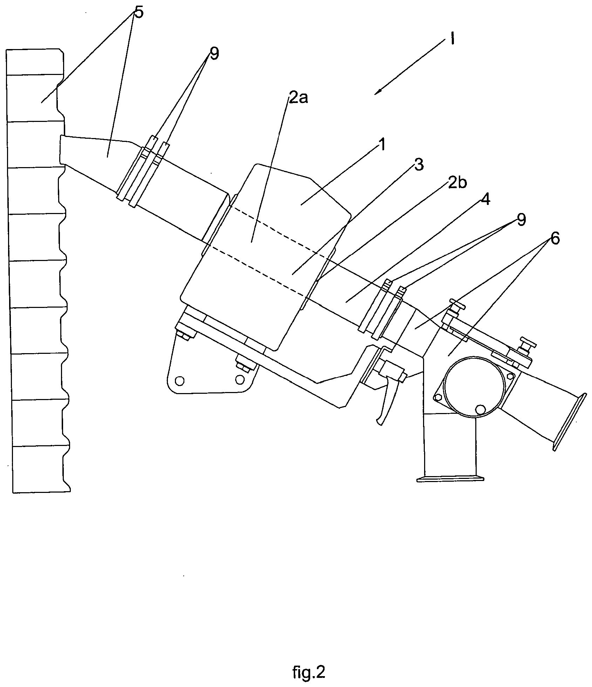

La figure 2 illustre un dispositif l selon l'invention de détection de métaux dans des matériaux, comprenant une unité de détection 1 ayant un orifice d'entrée 2a et un orifice de sortie 2b entre lesquels est ménagé un espace 3 de passage desdits matériaux au travers de l'unité, une conduite de convoyage 4 desdits matériaux au travers de ladite unité, disposée, de manière amovible dans le mode de réalisation illustré, dans ledit espace de passage, une première extrémité de la conduite émergeant de ladite unité par son orifice d'entrée et une seconde extrémité émergeant de cette unité par son orifice de sortie, ladite conduite étant constituée d'un matériau souple et, dans le mode de réalisation illustré, élastique, à base de silicone. Dans des modes de réalisation alternatifs, la conduite, lorsqu'elle est élastique peut également être constituée d'un matériau choisi parmi le caoutchouc et le PVC. La première extrémité de la conduite de convoyage est agencée pour être connectée comme illustré, de manière étanche et amovible à une unité 5 d'alimentation du dispositif en matériaux et maintenue en place au moyen de colliers autoserrants 9 et la seconde extrémité de la conduite est agencée pour être connectée comme illustré, de manière étanche et amovible à une unité 6 de tri des matériaux sortant du dispositif, cette seconde extrémité étant également maintenue en place par des mêmes colliers 9. Dans un autre mode de réalisation, la conduite de convoyage peut être maintenue en place sans l'aide de colliers autoserrants.

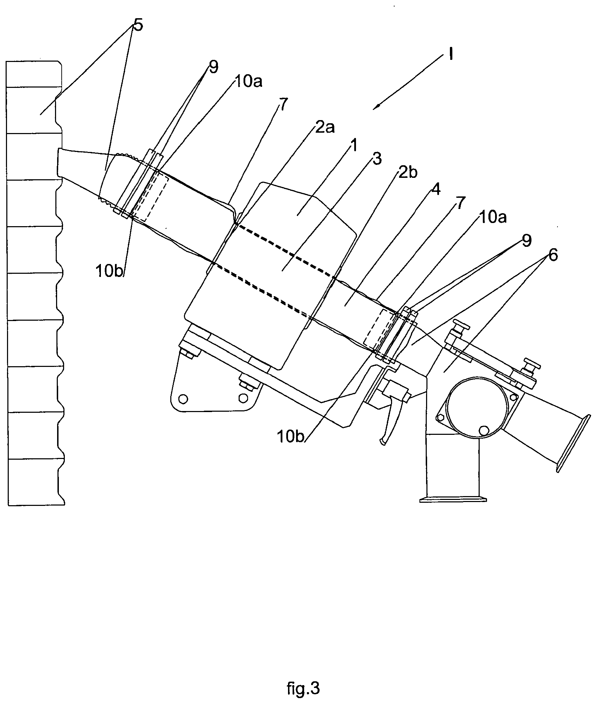

La figures 3 illustre le dispositif selon la figure 2 mais qui comprend en outre une manchette souple 7 d'une longueur supérieure à celle de la conduite de convoyage, agencée pour être disposée autour de celle-ci de sorte que les extrémités de ladite manchette débordent de celles de ladite conduite, la première extrémité de la manchette étant agencée pour être connectée, comme illustré, de manière étanche et amovible à l'unité d'alimentation en matériaux du dispositif et la seconde extrémité de la manchette est agencée pour être connectée, comme illustré, de manière étanche et amovible à l'unité de tri des matériaux sortant du dispositif, cette connexion étanche et amovible étant assurée au moyen des colliers autoserrants 9 enserrant chaque extrémité de la manchette sur les éléments des de l'unité respectivement d'alimentation et de tri à laquelle l'extrémité en question est connectée, et non dès lors les extrémités de la conduite de convoyage comme illustré à la figure 2. Dans le mode de réalisation de l'invention illustré, la conduite de convoyage est constituée d'un manchon du type décrit par la demande de brevet PCT/EP2008/006597, à savoir dont chaque extrémité comprend une gorge périphérique 10b pratiquée dans sa face intérieure, agencée pour recevoir un bourrelet périphérique complémentaire 10a agencé sur la face extérieure de l'élément de chaque unité auquel la conduite est agencée pour être connectée. Le périmètre de chaque extrémité de cette conduite est adapté à celui de l'élément de l'unité correspondante à laquelle elle est agencée pour être connectée.

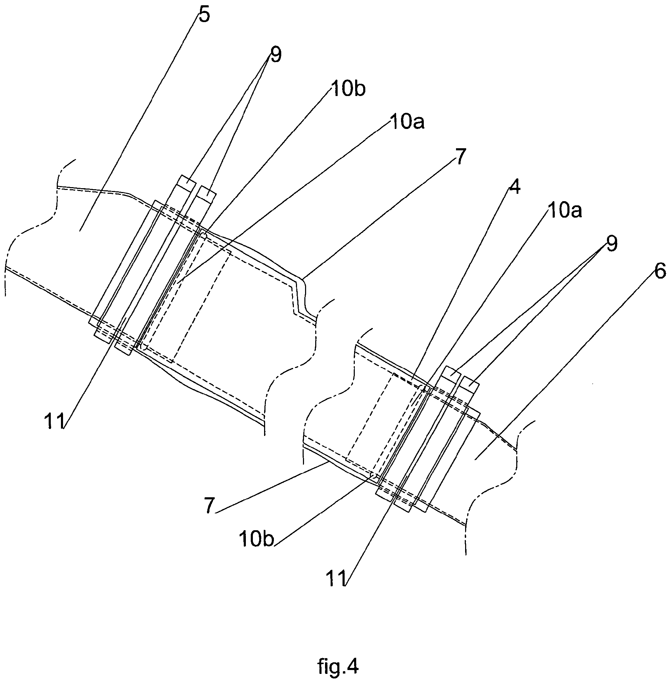

La figure 4 illustre cette connexion plus en détails et montre notamment qu'un anneau élastique 9 d'une épaisseur similaire à celle de la conduite d'alimentation du dispositif selon l'invention est agencé entre la face externe de l'élément de chaque unité à laquelle une extrémité de la conduite d'alimentation est connectée et la face interne de chaque extrémité de la manchette souple enserrée par les colliers autoserrants susmentionnés, pour compenser l'épaisseur de ladite conduite.

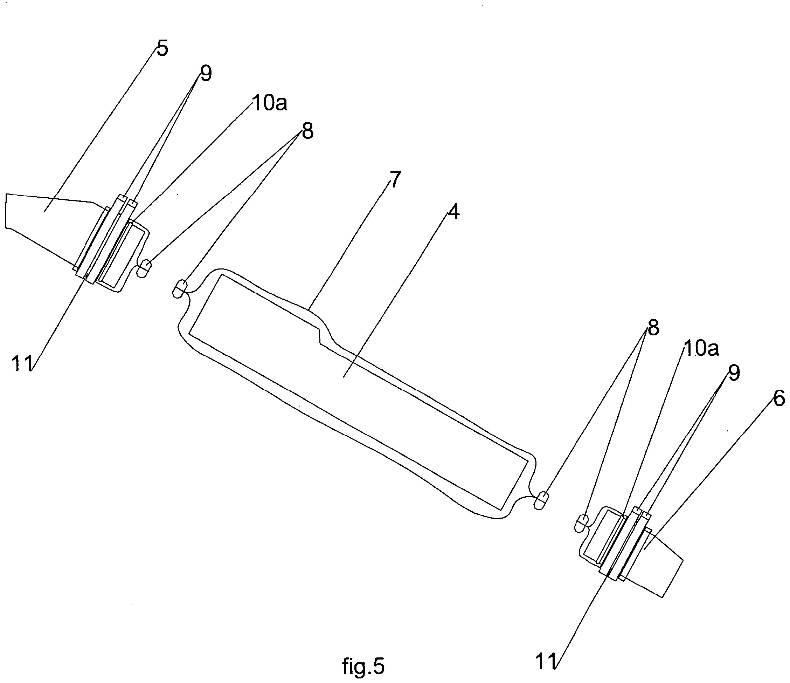

La figure 5 illustre la conduite de convoyage 4 et de la manchette 7 du dispositif selon la figure 3, ladite conduite étant déconnectée de l'unité d'alimentation et de l'unité de tri. Cette figure illustre également un moyen compris dans le dispositif selon l'invention, d'obturation de la manchette entre l'unité d'alimentation 5 et/ou l'unité de tri 6 et l'extrémité adjacente de la conduite de convoyage, lorsque la première extrémité de la manchette est connectée à ladite unité d'alimentation et/ou la deuxième extrémité de la manchette est connectée à l'unité de tri. Ledit moyen d'obturation comprend au moins un clips 8 agencé pour être fermé sur ladite manchette de sorte qu'elle se trouve obturée par pincement dans ledit clips. Alternativement, ce moyen d'obturation peut consister en un moyen de soudure ou de collage. Grâce à un tel moyen d'obturation, il est possible lorsqu'il est nécessaire de passer d'un premier à un deuxième type de matériaux alimentant le dispositif, par exemple lorsque l'on passe d'un type de comprimés pharmaceutique à un autre, de déconnecter la conduite des unités d'alimentation et de tri à l'intérieur de la manchette pour nettoyer ladite conduite avant d'y introduire les matériaux du second type, sans risque de diffusion dans l'air ambiant de résidus des matériaux du premier type. Une fois la conduite déconnectée à l'intérieur de la manchette et celle-ci obturée de part et d'autre de la conduite, la manchette peut être découpée du côté de l'obturation opposé à la conduite et l'ensemble partie de manchette obturée et conduite transporté dans un espace de nettoyage prévu à cet effet et par exemple immergé dans une solution de nettoyage avant de désobturer la manchette et d'ainsi pouvoir nettoyer la conduite. Une manchette neuve est disposée autour de la conduite avant la réinstallation de celle-ci dans l'espace interne du dispositif et la connexion de la manchette et de la conduite aux unités d'alimentation et de tri . De même, La manchette peut également être obturée de la même manière autour de l'extrémité de chaque unité à laquelle la conduite est agencée pour être connectée une fois celle-ci déconnectée à desdites unités à l'intérieur de la manchette, et celle-ci découpée du côté de l'obturation opposé à l'extrémité de l'unité correspondante, de sorte que ces unités puissent également être transportées et nettoyées dans des espaces prévus à cet effet sans qu'aucun résidu de matériaux du premier type ne s'en échappe dans l'air ambiant.

## Revendications

1. Dispositif de détection de métaux (I) dans des matériaux comprenant une unité de détection (1) ayant un orifice d'entrée (2a) et un orifice de sortie (2b) entre lesquels est ménagé un espace (3) de passage desdits matériaux au travers de l'unité (1), une conduite de convoyage (4) desdits matériaux au travers de ladite unité (1), disposée dans ledit espace (3) de passage, une première extrémité de la conduite émergeant de ladite unité (1) par son orifice d'entrée et une seconde extrémité émergeant de l'unité (1) par son orifice de sortie, ladite conduite (4) étant constituée d'un matériau souple et élastique, ladite conduite de convoyage (4) est configurée pour amortir des vibrations entre ladite unité de détection (1) et une unité d'alimentation (5) en matériaux dudit dispositif de détection (I), **caractérisé en ce que** ladite conduite de convoyage (4) est disposée de manière amovible dans ledit espace (3) de passage, **en ce que**
ladite conduite (4) est constituée d'un manchon dont chaque extrémité comprend une gorge périphérique (10b) pratiquée dans sa face intérieure, pour recevoir un bourrelet périphérique complémentaire (10a), **et en ce que** la première extrémité de la conduite est agencée pour être connectée de manière étanche et amovible à ladite unité d'alimentation (5) en matériaux du dispositif et **en ce que** la seconde extrémité de la conduite est agencée pour être connectée de manière étanche et amovible à une unité de tri (6) des matériaux sortant du dispositif.

2. Dispositif selon la revendication 1, **caractérisé en ce que** ledit matériau élastique est choisi parmi le caoutchouc, le PVC ou un matériau à base de silicone.

3. Dispositif selon l'une quelconque des revendications précédentes, **caractérisé en ce qu'**il comprend une manchette souple (7) d'une longueur supérieure à celle de la conduite de convoyage, agencée pour être disposée autour de celle-ci de sorte que les extrémités de ladite manchette débordent de celles de ladite conduite.

4. Dispositif selon la revendication 3, **caractérisé en ce que** la première extrémité de la manchette est agencée pour être connectée de manière étanche et amovible à ladite unité d'alimentation en matériaux du dispositif et **en ce que** la seconde extrémité de la manchette est agencée pour être connectée de manière étanche et amovible à ladite unité de tri des matériaux sortant du dispositif **et en ce que**
le dispositif comprend un moyen d'obturation de la manchette entre l'unité correspondante et l'extrémité adjacente de conduite de convoyage, lorsque la première extrémité de la manchette est connectée à ladite unité d'alimentation et/ou la deuxième extrémité de la manchette est connectée à l'unité de tri.

5. Dispositif selon la revendication 4, **caractérisé en ce que** ledit moyen d'obturation comprend au moins un clips (8) agencé pour être fermé sur ladite manchette de sorte qu'elle se trouve obturée par pincement dans ledit clips.

6. Dispositif selon la revendication 5, **caractérisé en ce que** ledit moyen d'obturation consiste en un moyen de soudure ou de collage.

7. Utilisation d'une conduite de convoyage (4) dans un dispositif de détection de métaux (I) selon l'une quelconque des revendications précédentes, pour amortir des vibrations entre l'unité d'alimentation (5) et l'unité de détection (1).

## Patentansprüche

1. Vorrichtung zum Erfassen von Metallen (I) in Materialien, umfassend eine Erfassungseinheit (1) mit einer Einlassöffnung (2a) und einer Auslassöffnung (2b), zwischen denen ein Raum (3) für den Durchgang der Materialien durch die Einheit (1) vorgesehen ist, eine Förderleitung (4) der Materialien durch die Einheit (1), die in dem Raum (3) für den Durchgang angeordnet ist, ein erstes Ende der Leitung, das aus der Einheit (1) durch ihre Einlassöffnung austritt, und ein zweites Ende, das aus der Einheit (1) durch ihre Auslassöffnung austritt, wobei die Leitung (4) aus einem flexiblen und elastischen Material besteht, wobei die Förderleitung (4) dazu ausgestaltet ist, Schwingungen zwischen der Erfassungseinheit (1) und einer Versorgungseinheit (5) der Erfassungsvorrichtung (I) mit Materialien zu dämpfen, **dadurch gekennzeichnet, dass**
die Förderleitung (4) in abnehmbarer Weise in dem Raum (3) für den Durchgang angeordnet ist, **dass**
die Leitung (4) aus einer Hülse besteht, bei der jedes Ende eine Umfangsnut (10b) umfasst, die in ihrer Innenfläche ausgeführt ist, um einen komplementären Umfangswulst (10a) aufzunehmen, **und dass**
das erste Ende der Leitung dazu ausgelegt ist, in abgedichteter und abnehmbarer Weise mit der Versorgungseinheit (5) der Vorrichtung mit Materialien verbunden zu sein, und dass das zweite Ende der Leitung dazu ausgelegt ist, in abgedichteter und abnehmbarer Weise mit einer Sortiereinheit (6) für die die Vorrichtung verlassenden Materialien verbunden zu sein.

2. Vorrichtung nach Anspruch 1, **dadurch gekennzeichnet, dass** das elastische Material ausgewählt ist aus Gummi, PVC oder einem Material auf Silikonbasis.

3. Vorrichtung nach einem der vorstehenden Ansprüche, **dadurch gekennzeichnet, dass** sie eine flexible Manschette (7) mit einer Länge, die größer ist als die der Förderleitung, umfasst, die dazu ausgelegt ist, um letztere herum so angeordnet zu werden, dass die Enden der Manschette über diejenigen der Leitung hinausragen.

4. Vorrichtung nach Anspruch 3, **dadurch gekennzeichnet, dass** das erste Ende der Manschette dazu ausgelegt ist, in abgedichteter und abnehmbarer Weise mit der Versorgungseinheit der Vorrichtung mit Materialien verbunden zu sein, und dass das zweite Ende der Manschette dazu ausgelegt ist, in abgedichteter und abnehmbarer Weise mit der Sortiereinheit für die die Vorrichtung verlassenden Materialien verbunden zu sein **und dass**
die Vorrichtung ein Mittel zum Versiegeln der Manschette zwischen der entsprechenden Einheit und dem benachbarten Ende der Förderleitung umfasst, wenn das erste Ende der Manschette mit der Versorgungseinheit verbunden ist und/oder das zweite Ende der Manschette mit der Sortiereinheit verbunden ist.

5. Vorrichtung nach Anspruch 4, **dadurch gekennzeichnet, dass** das Mittel zum Versiegeln mindestens einen Clip (8) umfasst, der dazu ausgelegt ist, auf der Manschette geschlossen zu werden, sodass diese durch Einklemmen in den Clip versiegelt wird.

6. Vorrichtung nach Anspruch 5, **dadurch gekennzeichnet, dass** das Mittel zum Versiegeln aus einem Schweiß- oder Klebemittel besteht.

7. Verwendung einer Förderleitung (4) in einer Vorrichtung zum Erfassen von Metallen (I) nach einem der vorstehenden Ansprüche zum Dämpfen von Schwingungen zwischen der Versorgungseinheit (5) und der Erfassungseinheit (1).

## Claims

1. Device for detecting metals (I) in materials, comprising a detection unit (1) having an inlet port (2a) and an outlet port (2b) between which a space (3) for passage of said materials through the unit (1) is provided, a conveying duct (4) for conveying said materials through said unit (1), arranged in said passage space (3), a first end of the duct emerging from said unit (1) via its inlet port and a second end emerging from the unit (1) via its outlet port, said duct (4) being formed from a flexible and elastic material, said conveying duct (4) is configured to damp vibrations between said detection unit (1) and a unit (5) for feeding materials to said detection device (I), **characterised in that** said conveying duct (4) is removably arranged in said passage space (3), **in that**
said duct (4) consists of a sleeve each end of which comprises a peripheral groove (10b) made in its inner face for receiving a complementary peripheral bead (10a), **and in that**
the first end of the duct is designed to be connected in a sealed and removable manner to said unit (5) for feeding materials to the device and **in that** the second end of the duct is arranged to be connected in a sealed and removable manner to a unit (6) for sorting the materials leaving the device.

2. Device according to claim 1, **characterised in that** said elastic material is chosen from rubber, PVC or a silicone-based material.

3. Device according to any one of the preceding claims, **characterised in that** it comprises a flexible cuff (7) of a length greater than that of the conveying duct, arranged to be disposed around the latter so that the ends of said cuff protrude beyond those of said duct.

4. Device according to claim 3, **characterised in that** the first end of the cuff is arranged to be connected in a sealed and removable manner to said unit for feeding materials of the device and **in that** the second end of the cuff is arranged to be connected in a sealed and removable manner to said unit for sorting the materials leaving the device **and in that**
the device comprises a means for sealing off the cuff between the corresponding unit and the adjacent end of the conveying duct, when the first end of the cuff is connected to said feed unit and/or the second end of the cuff is connected to the sorting unit.

5. Device according to claim 4, **characterised in that** said sealing means comprises at least one clip (8) arranged to be closed on said cuff so that it is sealed off by pinching in said clip.

6. Device according to claim 5, **characterised in that** said sealing means consists in a welding or gluing means.

7. Use of a conveying duct (4) in a device for detecting metals (I) according to any one of the preceding claims, for damping vibrations between the feed unit (5) and the detection unit (1).
